# EUROPÄISCHE PATENTSCHRIFT

(11) **EP 1 594 930 B1**
(45) Veröffentlichungstag und Bekanntmachung des Hinweises auf die Patenterteilung: **09.05.2007**
(21) Anmeldenummer: 03795759.4
(22) Anmeldetag: 17.12.2003
(51) Int. Cl.: C09D 5/16, F16L 55/162, C09D 163/00, B05D 3/00

(54) **VERFAHREN ZUR BEHANDLUNG VON ROHRLEITUNGEN**
METHOD FOR TREATING TUBULAR GOODS
PROCEDE DE TRAITEMENT DE TUBULURES

(30) Priorität: 18.02.2003 DE 10306842
(43) Veröffentlichungstag der Anmeldung: 16.11.2005
(73) Patentinhaber: Roxia System, 92300 Levallois Perret (FR)
(72) Erfinder: Schildhauer, Otto, 69469 Weinheim (DE)
(74) Vertreter: Cardy, Sophie Marie
(86) Internationale Anmeldenummer: PCT/DE2003/004169
(87) Internationale Veröffentlichungsnummer: WO 2004/074388

(56) Entgegenhaltungen:
- EP-A- 0 488 391
- DE-A- 10 061 251
- DE-A- 19 745 642
- DE-C1- 19 510 703
- US-A1- 2002 051 823

## Beschreibung

Die Erfindung betrifft ein Verfahren zur Behandlung von Rohrleitungen, insbesondere zur Sanierung von Trinkwasserleitungen, wobei die Rohrleitung - sofern erforderlich - von Innenbelägen befreit und mit einem Beschichtungsmaterial innenbeschichtet wird.

Verfahren zur Sanierung von Rohrleitungen dieser Art sind seit langem aus der Praxis bekannt. Lediglich beispielhaft wird dazu auf die DE 40 34 483 A1, DE 44 30 334 A1 sowie DE 44 04 473 C2 verwiesen. Aus diesen Druckschriften sind gattungsbildende Verfahren zur Sanierung von Rohrleitungen bekannt, wobei dort starke Verschmutzungen und/oder Korrosion an der Innenwandung der Rohrleitung entfernt werden. Oftmals hat die Korrosion zu Lochfraß bzw. zu Löchern in der Rohrleitung geführt, so dass die erforderliche Dichtigkeit nicht mehr gegeben ist.

Verfahren der gattungsbildenden Art werden in der Praxis auf unterschiedlichste Weisen durchgeführt, wobei bei allen gängigen Verfahren zunächst die Innenbeläge an der Innenwandung der Rohrleitung - mechanisch und/oder chemisch - entfernt werden und die Innenwandung, gegebenenfalls nach weiteren Behandlungsschritten mit einem Beschichtungsmaterial beschichtet wird. Die gattungsbildenden Verfahren sind in physikalischer Hinsicht ausgereift und gewährleisten meist ausgezeichnete Dichtigkeiten und geringe Strömungswiderstände für das die Leitungen durchströmende Wasser. Langfristig kann jedoch nicht gewährleistet werden, dass die Rohrleitungen in hygienischer Hinsicht den geforderten DIN-Normen und den damit verbundenen hygienischen Voraussetzungen entsprechen, da die in Innenrohrleitungen geführten Medien - regelmäßig Leitungswasser - zum einen Verunreinigungen in die Rohrleitungen eintragen und sich zum anderen in den eingetragenen Medien Verunreinigungen bilden, was insbesondere dann geschieht, wenn die Rohrleitungen lange nicht durchströmt werden.

Ganz besonders problematisch sind solche Verunreinigungen und unhygienischen Verhältnisse im Inneren von Trinkwasserleitungen. Vor allem in Trinkwasserleitungen, die etwa 30° C bis 45° C heißes Trinkwasser führen, können sich Krankheitserreger bilden. Es ist beispielsweise bekannt, dass Legionellen ein ganz natürlicher Bestandteil aller Süßwasser sind und in geringen Konzentrationen weitgehend ungefährlich sind. Wird das Wasser jedoch auf 35° C bis 45° C erhitzt, so können sich Kolonien von Legionellen bilden. Dabei ist es möglich, dass das Wasser derart kontaminiert wird, dass ein erhöhtes Infektionsrisiko bei Genuss des Wassers oder Inhalierung von Wasserdampf auftritt. Gerade in Krankenhäusern oder Kindergärten, in denen Personen mit zum Teil geschwächter Immunabwehr in den Genuss des Wassers kommen können, besteht ein erhöhtes Infektionsrisiko. Ganz besonders problematisch ist hierbei, dass es an den Rohrleitungsinnenflächen zur Sedimentbildung oder zur Bildung von Biofilmen kommen kann, an denen sich Legionellen hartnäckig festsetzen.

Insoweit ist es mit den bekannten Verfahren zwar möglich, defekte oder verschmutzte Rohrleitungen zuverlässig zu reinigen und abzudichten, jedoch können die genannten Verfahren langfristig keine hygienischen Bedingungen im Inneren der Rohrleitungen gewährleisten.

Der vorliegenden Erfindung liegt daher die Aufgabe zugrunde, ein Verfahren zur Sanierung von Rohrleitungen, insbesondere von Trinkwasserleitungen, anzugeben, welches bei problemloser Anwendung langfristig hygienische Bedingungen im Inneren der Rohrleitung gewährleistet.

Die voranstehende Aufgabe wird durch die Merkmale des Patentanspruchs 1 gelöst. Gemäß Patentanspruch 1 ist ein Verfahren zur Sanierung von Rohrleitungen, insbesondere von Trinkwasserleitungen, wobei die Rohrleitung von Innenbelägen befreit und mit einem Beschichtungsmaterial innenbeschichtet wird, dadurch gekennzeichnet, dass dem Beschichtungsmaterial ein für niedrige Lebewesen schädliches und für höhere Lebewesen unbedenkliches Mittel, d.h. ein Mittel mit antimikrobiellen Eigenschaften, beigemengt wird.

Erfindungsgemäß ist erkannt worden, dass das Beimengen eines solchen Mittels in das Beschichtungsmaterial eine homogene Verteilung des Mittels an der Rohrinnenfläche bewirkt. Durch die homogene Verteilung des Mittels ist gewährleistet, dass Mikroben, welche sich in Form von Sedimentbildung oder Biofilmen an der Rohrinnenfläche niederschlagen, abgetötet werden. Insoweit sind im Rohrinnern hygienische Bedingungen gegeben, die eine Bildung von Bakterien, Hefen, Pilzen oder Algen langfristig wirksam verhindern. Das erfindungsgemäße Verfahren stellt somit sicher, dass höhere Wirbeltiere, Vertebraten und insbesondere Menschen durch das Mittel nicht geschädigt, jedoch niedrige Lebewesen zuverlässig dezimiert werden.

In ganz besonders vorteilhafter Weise könnte als Mittel, welches dem Beschichtungsmaterial beigemengt wird, ein Biozid verwendet werden. Biozide sind Stoffe oder Zubereitungen, denen bestimmungsgemäß die Eigenschaft innewohnt, Lebewesen abzutöten oder zumindest in ihrer Lebensfunktion einzuschränken. Diese Eigenschaft haben Biozide mit Pflanzenschutzmitteln gemein. Der wesentliche Unterschied zu Pflanzenschutzmitteln besteht darin, dass Biozide gerade nicht im Agrarbereich sondern bei Schadorganismen Anwendung finden, die das Wohlbefinden des Menschen oder dessen Güter gefährden. Ganz vorteilhaft können Biozide eingesetzt werden, die eine selektive Wirkung haben und lediglich Schadorganismen abtöten, jedoch für den Menschen oder Haustiere unbedenklich sind.

Als besonders geeignetes Biozid könnten sogenannte SAM-Polymere verwendet werden, welche hochwirksam gegen Bakterien, Pilze und Algen sind. Die SAM-Polymere sind gegen Mikroben aktiv, für höhere Lebewesen aber völlig unschädlich. Sie töten Bakterien wie Legionellen ab und verhindern, dass Schimmelpilze auf Oberflächen Fuß fassen können. Die SAM-Polymere weisen eine schraubenförmige Struktur auf, wodurch sie ihre funktionellen Gruppen nach außen aufspalten. Auf diese Weise entsteht eine hohe elektrostatische Wirkung, die eine Besiedlung mit Mikrolebewesen effektiv verhindert. Die Bezeichnung SAM steht für "SUSTAINABLE ACTIVE MICROBICIDAL".

Als antimikrobiell wirkendes Mittel könnte ein zum lonenaustausch mit Wasser geeigneter Stoff verwendet werden, so dass die Bildung eines Biofilms vermieden wird. Dabei kann es sich um Silber oder um einen silberhaltigen Stoff handeln. Von ganz besonderem Vorteil ist die Verwendung von Nanosilber, wodurch sich das Beschichtungsmaterial antimikrobiell ausrüsten lässt. Eine solche antibakterielle Beschichtung ist jedenfalls einer mittelbaren Dosierung von Silberionen in das Leitungswasser vorzuziehen, zumal eine im Trinkwasser zulässige Dosierung nur eine geringe Wirkung zur Vermeidung eines Biofilms hat.

Als Beschichtungsmaterial könnte ein Zwei-Komponenten-Epoxydharz verwendet werden. Die Verwendung eines Zwei-Komponenten-Epoxydharzes ist dahingehend vorteilhaft, dass die Komponenten getrennt gelagert nahezu unbegrenzt haltbar sind und erst kurz vor Anwendung miteinander vermengt werden.

Das antimikrobiell wirkende Mittel könnte der Binderkomponente des Epoxydharzes beigemengt werden. Die Beimengung könnte in Form von partikulären Einlagerungen erfolgen, so dass sich im ausgehärteten Zustand ein Einlagerungsgefüge mit zumindest geringfügiger Porosität ergibt. Die Beimengung des antimikrobiellen Mittels könnte auch in Form von Fasern erfolgen, wobei die Fasern als Träger des antimikrobiellen Mittels dienen oder insgesamt aus einem antimikrobiellen Mittel bestehen.

Ganz in Abhängigkeit von der chemischen Struktur des Biozids kann dieses vorteilhaft mit der Härterkomponente oder mit der Binderkomponente des Epoxydharzes vermischt werden. Hierdurch ist gewährleistet, dass das Biozid keine unerwünschten Verbindungen oder Reaktionen entweder mit der Härterkomponente oder mit der Binderkomponente des Epoxydharzes eingeht.

Das Epoxydharz könnte durch eine Zwei-Komponentenkartusche in die Rohrleitung eingebracht werden. Die Verwendung einer Zwei-Komponentenkartusche ermöglicht dem Anwender ein besonders definiertes und gezieltes Einbringen auch in Rohrleitungen geringen Durchmessers oder komplizierter Geometrie. Insoweit ist eine besonders exakte und definierte Arbeitsweise ermöglicht.

Das Epoxydharz könnte so lange an einem Ende der Rohrleitung eingebracht werden, bis es am anderen Ende austritt. Diese Verfahrensweise ist dahingehend vorteilhaft, dass der Anwender sicher sein kann, dass das gesamte Rohr mit Beschichtungsmaterial gefüllt ist. Insoweit ist es ausgeschlossen, dass größere Flächen nicht mit dem Epoxydharz beschichtet sind und die Rohrinnenfläche dadurch abschnittsweise unbedeckt ist.

Das Epoxydharz könnte durch die Rohrleitung gesaugt werden. Das Saugen des Epoxydharzes durch die Rohrleitung ist dahingehend vorteilhaft, dass brüchige Stellen der Rohrleitung nicht nach außen mit Kraft beaufschlagt werden. Hierdurch ist vermieden, dass ein poröses mit Löchern versehenes Rohr noch stärker beschädigt wird, indem die Löcher ausreißen und aufgeweitet werden.

Wenn das Rohr hinreichend stabil ausgebildet ist, könnte das Epoxydharz durch die Rohrleitung geblasen oder gepresst werden. Das Blasen oder Pressen des Epoxydharzes durch die Rohrleitung ist dahingehend vorteilhaft, dass auch hochviskose Materialien bei hohem Pressdruck durch die Rohrleitung gedrückt werden können.

Ein besonders variables Beschichtungsverfahren könnte dadurch durchgeführt werden, dass das Epoxydharz durch die Rohrleitung alternierend gesaugt und geblasen oder gepresst wird. Durch diese Verfahrensweise können stabile Abschnitte des Rohrs durch Pressen mit dem Beschichtungsmaterial benetzt werden, weniger stabile können durch Saugen beschichtet werden. Insoweit ist es möglich, die Belastung des Rohres auf die Stabilität des Rohres an verschiedenen Abschnitten abzustimmen.
Technisch problemlos und kommerziell leicht realisierbar könnte das Epoxydharz durch alternierenden Überdruck und Unterdruck unter Verwendung von Pumpen in der Rohrleitung hin und her bewegt werden. Das Verfahren ist zudem dahingehend vorteilhaft, dass schwer benetzbare Stellen durch wiederholtes Kontaktieren mit dem Beschichtungsmaterial bedeckt werden können. Selbstverständlich ist es auch denkbar, das Epoxydharz durch wechselseitigen Überdruck an beiden Enden der Rohrleitung hin und her zu bewegen. Ganz in Abhängigkeit von der Stabilität der Rohrleitung kann der Anwender flexibel und variabel zwischen Überdruck und Unterdruck wählen, um das Epoxydharz in der Rohrleitung zu bewegen.

Selbstverständlich ist es denkbar, die zuvor erwähnten Verfahrensschritte mit jeglichem Beschichtungsmaterial durchzuführen, dessen Fluideigenschaften die Durchführung der genannten Schritte ermöglichen. Insoweit sind die Verfahrensschritte nicht auf die Verwendung von Epoxydharz eingeschränkt.

Zur Beseitigung von hartnäckigen Innenbelägen könnten Abrasivmittel verwendet werden. Die Verwendung von Abrasivmitteln stellt eine wirksame Methode dar sowohl Korrosionsrückstände als auch mit der Rohrleitung verbäckte Verunreinigungen zuverlässig von der Rohrleitung zu entfernen, da die Abrasivmittel aufgrund ihrer Rauhigkeit die Rohrinnenfläche abreiben.

Hinsichtlich einer besonders umweltschonenden Durchführung des Verfahrens ist es von Vorteil, wenn als Abrasivmittel Sand oder Korund verwendet werden, da Sand oder Korund ökologisch unbedenklich sind. Bei dem zum Entfernen der Innenbeläge dienenden Abrasivmittel könnte es sich um Partikel jedweder Art handeln, die jedoch härter sein müssten als die zu entfernenden Innenbeläge. Dabei hat es sich insbesondere bei der Sanierung von Wasserleitungen bewährt, dass die Partikel eine Korngröße im Bereich von 0,3 mm und 6 mm aufweisen. Ein spezifisches Gewicht von mehr als 3,0 g pro Kubikzentimeter hat sich ebenfalls als vorteilhaft herausgestellt, wobei in diesem Fall Luft als Trägermedium dient. Im Konkreten könnte es sich bei den abrasiv wirkenden Partikeln um Korund oder Quarzsand handeln. Ebenso könnten die abrasiv wirkenden Partikel als Metallteilchen, insbesondere als ferromagnetische Teilchen, ausgeführt sein. Aufgrund solcher Partikel wäre eine anschließende magnetische Trennung der abrasiv wirkenden Partikel von den losgelösten Innenbelägen möglich, die aus Rost und/oder Kalk bestehen.

Die Abrasivmittel könnten in einem Strömungsmedium mitgeführt werden. Hierdurch ist es möglich, sämtliche Zonen der Rohrleitung, insbesondere auch verwinkelte Abschnitte, mit dem Abrasivmittel zuverlässig in Kontakt zu bringen, da die Abrasivmittel problemlos mit dem Strömungsmedium transportiert werden.

Eine besonders schonende Behandlung der Rohrleitung könnte dadurch erfolgen, dass das Strömungsmedium durch die Rohrleitung gesaugt wird. Das Saugen verhindert eine Kraftbeaufschlagung der Rohrwandung nach außen, so dass poröse und dünne Stellen der Rohrwandung gegen Ausreißen und Aufweiten geschont werden.

Bei besonders hartnäckigen Verschmutzungen und stabilen Rohrleitungen könnte das Strömungsmedium auch durch die Rohrleitung geblasen oder gepresst werden. Das Blasen und Pressen hat den Vorteil, dass hohe Drücke aufgewendet werden können, die bewirken, dass das Abrasivmittel zum einen mit hoher Geschwindigkeit längs der Rohrleitung, aber auch in radialer Richtung gegen die Rohrinnenwandung gedrückt wird.

Ganz in Abhängigkeit von der Rohrbeschaffenheit könnte der Anwender das Strömungsmedium durch die Rohrleitung alternierend saugen oder blasen. Durch diese Vorgehensweise hat der Anwender die Möglichkeit, in unterschiedlichen Bereichen der Rohrleitung unterschiedlich stark beanspruchende Reinigungsmethoden anzuwenden.

Das Bewegen der Abrasivmittel innerhalb der Rohrleitungen könnte in vorteilhafter Weise dadurch generiert werden, dass das Strömungsmedium und damit die Abrasivmittel durch alternierenden Unterdruck und Überdruck in der Rohrleitung hin und her gefördert wird. Mit anderen Worten könnte in der Rohrleitung wechselseitig Unterdruck und Überdruck erreicht werden, wodurch nämlich das Abrasivmittel alternierend hindurchgesaugt und hindurchgeblasen wird. Ebenso ist es jedoch auch denkbar, das Strömungsmedium durch wechselseitigen Unterdruck an beiden Enden der Rohrleitung in der Rohrleitung hin und her zu fördern, wobei dann die voranstehend genannten Vorteile gegeben sind. Schließlich ist es auch denkbar, das Strömungsmedium durch wechselseitigen Überdruck an beiden Enden der Rohrleitungen in der Rohrleitung hin und her zu befördern, wobei sich der Überdruck nur dann zur Förderung des Abrasivmittels sinnvoll einsetzen lässt, wenn keine wesentlichen Leckagen in der Rohrleitung vorhanden sind.

Im Sinne einer Umweltverträglichkeit des Verfahrens könnte als Strömungsmedium Wasser verwendet werden, welches sowohl leicht verfügbar als auch leicht zu entsorgen ist.

Als Strömungsmedium könnte Luft verwendet werden. Dies ist dahingehend vorteilhaft, dass in Bezug auf das Strömungsmittel keine Entsorgungsprobleme auftreten, da sich das Strömungsmittel nach seiner Verwendung verflüchtigt.

Hinsichtlich einer besonders umweltschonenden Durchführung des Verfahrens könnten die Abrasivmittel nach Entfernen der Innenbeläge aus dem Strömungsmedium herausgefiltert werden. Hierzu könnte eine Filtereinrichtung dienen. Dabei ist es denkbar, dass das Strömungsmedium zusammen mit dem Abrasivmittel durch einen Kompressor, welchem eine Filtereinrichtung nachgeschaltet ist, aus der Rohrleitung gesaugt wird.

Eine besonders effektive Reinigung könnte durch den Einsatz von Ultraschall erzielt werden. Vorteilhaft werden hierbei die an der Innenwandung der Rohrleitung gebildeten Innenbeläge mittels Ultraschall von der Innenwandung der Rohrleitung gelöst und dabei gegebenenfalls zerkleinert. Hierbei ist zum Entfernen der Innenbeläge a priori nicht erforderlich, irgendwelche Abrasivmittel zu verwenden, da der auf die Innenbeläge treffende Ultraschall diese von der Innenwandung der Rohrleitung ablöst und obendrein eine Zerkleinerung dieser Innenbeläge bewirkt. Im Anschluss können diese mühelos aus der Rohrleitung herausgefördert werden. Hinsichtlich einer konkreten Ausführung der Ultraschallbeaufschlagung könnte in die Rohrleitung eine Ultraschallsonde eingeführt werden. Zur wirksamen Ultraschallbehandlung der gesamten Rohrleitung könnte die Ultraschallsonde im Wesentlichen über die gesamte Länge durch die Rohrleitung hindurchgeführt bzw. hindurchbewegt werden. Diese Bewegung könnte beispielsweise mittels einer biegsamen Welle erfolgen. Ebenso wäre es jedoch auch denkbar, die Ultraschallsonde in die Rohrleitung regelrecht hineinzusaugen, nämlich bis zum auslassseitigen Ende der Rohrleitung. Die Ultraschallsonde selbst könnte einen miniaturisierten Ultraschallerreger aufweisen, der in etwa orthogonal zur Bewegungsrichtung, d. h. quer zur Längserstreckung der Rohrleitung, Ultraschall emittiert. Somit wäre gewährleistet, dass die Ultraschallschwingungen unmittelbar auf die Innenbeläge treffen, wobei eine Dämpfung der Ultraschallschwingungen aufgrund der kurzen Strecken weitestgehend verhindert ist.

Die Rohrleitung könnte nach Entfernen der Innenbeläge erwärmt werden. Das Aufbringen des Beschichtungsmaterials und somit einerseits eine gute Benutzung mit der Innenwandung der Rohrleitung und andererseits ein schnelles anschließendes Aushärten wird ganz besonders dadurch begünstigt, dass die Rohrleitung nach Entfernung der Innenbeläge auf eine über der Raumtemperatur liegende Temperatur aufgeheizt wird. Dabei hat sich eine Temperatur von etwa 40° C ganz besonders bewährt. Das Aufheizen der Rohrleitung könnte wiederum durch Hindurchsaugen aufgeheizter Luft erfolgen, die so lange durch die Rohrleitung hindurchgesaugt wird, bis am auslassseitigen Ende die gewünschte Temperatur erreicht ist. Diese könnte man wiederum über den Temperaturabfall zwischen dem einlassseitigen Ende und dem auslassseitigen Ende der Rohrleitung detektieren. Wesentlich ist jedenfalls, dass das Aufheizen der Rohrleitung durch Hindurchsaugen aufgeheizter Luft und nicht etwa durch Hindurchdrücken von Pressluft erfolgt. Schließlich könnte zum Aufheizen der Rohrleitung dienende vorgewärmte Luft ebenfalls über eine Filtereinrichtung abgesaugt werden, wobei diese Filtereinrichtung einem zum Ansaugen dienenden Kompressor direkt vorgeschaltet sein kann.

Abschließend sei besonders hervorgehoben, dass das beanspruchte Verfahren zahlreiche weitere vorteilhafte Verfahrensschritte umfassen kann, ohne von der beanspruchten Lehre gemäß Patentanspruch 1 abzuweichen.

## Patentansprüche

1. Verfahren zur Behandlung von Rohrleitungen, insbesondere zur Sanierung von Trinkwasserleitungen, wobei die Rohrleitung - sofern erforderlich - von Innenbelägen befreit und mit einem Beschichtungsmaterial innenbeschichtet wird, wobei dem Beschichtungsmaterial ein für niedrige Lebewesen schädliches und für höhere Lebewesen unbedenkliches Mittel, d.h. ein Mittel mit antimikrobiellen Eigenschaften, beigemengt wird, wobei als Mittel ein Biozid verwendet wird und wobei es sich bei dem Biozid um antimikrobielle aktive SAM-Polymere handelt.

2. Verfahren zur Behandlung von Rohrleitungen, insbesondere zur Sanierung von Trinkwasserleitungen, wobei die Rohrleitung - sofern erforderlich - von Innenbelägen befreit und mit einem Beschichtungsmaterial innenbeschichtet wird, wobei dem Beschichtungsmaterial ein für niedrige Lebewesen schädliches und für höhere Lebewesen unbedenkliches Mittel, d.h. ein Mittel mit antimikrobiellen Eigenschaften, beigemengt wird, wobei als antimikrobielles Mittel ein zum lonenaustausch mit Wasser geeigneter Stoff verwendet wird und wobei es sich bei diesem Stoff um Nanosilber handelt.

3. Verfahren nach Anspruch 1 oder 2, **dadurch gekennzeichnet, dass** das antimikrobielle Mittel der Binderkomponente des Epoxydharzes vorzugsweise
in Form von partikulären Einlagerungen oder
in Form von Fasern erfolgt, die als Träger des antimikrobiellen Mittels dienen, beigemengt wird.

4. Verfahren nach einem der Ansprüche 1 bis 3, **dadurch gekennzeichnet, dass** das Beschichtungsmaterial, vorzugsweise das Epoxydharz, durch eine Kartusche, vorzugsweise eine Zwei-Komponentenkartusche in die Rohrleitung eingebracht wird.

5. Verfahren nach einem der Ansprüche 1 bis 4, **dadurch gekennzeichnet, dass** das Beschichtungsmaterial solange an einem Ende einer an mindestens zwei Seiten offenen Rohrleitung eingebracht wird, bis es am anderen Ende austritt.

6. Verfahren nach einem der Ansprüche 1 bis 5, **dadurch gekennzeichnet, dass** das Beschichtungsmaterial durch die Rohrleitung vorzugsweise alternierend gesaugt, geblasen oder gepresst wird, wobei
das Beschichtungsmaterial durch alternierenden Überdruck und Unterdruck oder durch wechselseitigen Überdruck an zwei Enden der Rohrleitung oder durch wechselseitigen Unterdruck an zwei Enden der Rohrleitung in der Rohrleitung hin- und herbewegt wird.

7. Verfahren nach einem der Ansprüche 1 bis 6, **dadurch gekennzeichnet, dass** zur Beseitigung von Innenbelägen Abrasivmittel verwendet werden, wobei als Abrasivmittel vorzugsweise Sand oder Korund verwendet wird.

8. Verfahren nach Anspruch 7, **dadurch gekennzeichnet, dass** die Abrasivmittel in einem Strömungsmedium mitgeführt werden, wobei das Strömungsmedium durch die Rohrleitung gesaugt oder durch die Rohrleitung geblasen oder gepresst oder durch die Rohrleitung alternierend gesaugt oder geblasen oder gepresst wird, wobei
das Strömungsmedium durch alternierenden Überdruck und Unterdruck oder durch wechselseitigen Überdruck an zwei Enden der Rohrleitung oder durch wechselseitigen Unterdruck an zwei Enden der Rohrleitung in der Rohrleitung hin- und herbewegt werden kann.

9. Verfahren nach Anspruch 8, **dadurch gekennzeichnet, dass** als Strömungsmedium Wasser oder Luft verwendet wird.

10. Verfahren nach Anspruch 8 oder 9, **dadurch gekennzeichnet, dass** die Abrasivmittel nach Entfernen der Innenbeläge aus dem Strömungsmedium herausgefiltert werden.

11. Verfahren nach einem der Ansprüche 8 bis 10, **dadurch gekennzeichnet, dass** die Innenbeläge unter Einsatz von Ultraschall entfernt werden.

12. Verfahren nach einem der Ansprüche 1 bis 11, **dadurch gekennzeichnet, dass** die Rohrleitung nach Entfernen der Innenbeläge erwärmt wird.

## Claims

1. Method for treating pipelines, in particular for sanitising drinking water lines, wherein the pipeline - if necessary - is freed of internal deposits and is coated internally with a coating material, wherein an agent which is harmful to lesser developed organisms and harmless to more highly developed organisms, i.e. an agent with antimicrobial properties, is mixed with the coating material, a biocide being used as the agent and the biocide being antimicrobial active SAM polymers.

2. Method for treating pipelines, in particular for sanitising drinking water lines, wherein the pipeline - if necessary - is freed of internal deposits and is coated internally with a coating material, wherein an agent which is harmful to lesser developed organisms and harmless to more highly developed organisms, i.e. an agent with antimicrobial properties, is mixed with the coating material, a material suitable for ion exchange with water being used as the antimicrobial agent and this material being nano silver.

3. Method according to claim 1 or 2, **characterised in that** the antimicrobial agent is preferably mixed with the binder component of the epoxy resin
in the form of particulate inclusions or
in the form of fibres which are used as carriers of the antimicrobial agent.

4. Method according to any one of claims 1 to 3, **characterised in that** the coating material, preferably the epoxy resin, is introduced by a cartridge, preferably a two-component cartridge, into the pipeline.

5. Method according to any one of claims 1 to 4, **characterised in that** the coating material is introduced at one end of a pipeline, which is open at at least two sides, until it exits at the other end.

6. Method according to any one of claims 1 to 5, **characterised in that** the coating material is, preferably alternately, sucked, blown or pressed through the pipeline, wherein
the coating material is moved back and forth in the pipeline by alternating excess pressure and reduced pressure
or by alternating excess pressure at two ends of the pipeline or by alternating reduced pressure at two ends of the pipeline.

7. Method according to any one of claims 1 to 6, **characterised in that** to eliminate internal deposits, abrasives are used, sand or corundum preferably being used as the abrasives.

8. Method according to claim 7, **characterised in that** the abrasives are entrained in a flow medium, the flow medium being sucked through the pipeline or blown or pressed through the pipeline or alternatingly sucked or blown or pressed through the pipeline, wherein
the flow medium can be moved back and forth in the pipeline by alternating excess pressure and reduced pressure or by alternating excess pressure at two ends of the pipeline or by alternating reduced pressure at two ends of the pipeline.

9. Method according to claim 8, **characterised in that** water or air is used as the flow medium.

10. Method according to claim 8 or 9, **characterised in that** the abrasives are filtered out from the flow medium after removal of the internal deposits.

11. Method according to any one of claims 8 to 10, **characterised in that** the internal deposits are removed using ultrasound.

12. Method according to any one of claims 1 to 11, **characterised in that** the pipeline is heated after removal of the internal deposits.

## Revendications

1. Procédé pour le traitement de conduites tubulaires, en particulier pour l'assainissement de conduites d'eau potable, dans lequel la conduite tubulaire - pour autant que nécessaire - est débarrassée des concrétions intérieures et revêtue à l'intérieur avec un matériau de revêtement, un agent nuisible pour les êtres vivants inférieurs et inoffensif pour les êtres vivants supérieurs, c'est-à-dire un agent avec des propriétés antimicrobiennes, étant mélangé au matériau de revêtement, procédé dans lequel on utilise un biocide à titre d'agent, et ledit biocide est un polymère-SAM actif sur le plan antimicrobien.

2. Procédé pour le traitement de conduites tubulaires, en particulier pour l'assainissement de conduites d'eau potable, dans lequel la conduite tubulaire - pour autant que nécessaire - est débarrassée des concrétions intérieures et revêtue à l'intérieur avec un matériau de revêtement, un agent nuisible pour les êtres vivants inférieurs et inoffensif pour les êtres vivants supérieurs, c'est-à-dire un agent avec des propriétés antimicrobiennes, étant mélangé au matériau de revêtement, procédé dans lequel on utilise à titre d'agent antimicrobien un produit approprié pour l'échange d'ions avec l'eau, ledit produit étant du nano-argent.

3. Procédé selon la revendication 1 ou 2, **caractérisé en ce que** l'agent antimicrobien est mélangé aux composants liants de la résine époxy, de préférence :
sous la forme d'incrustations en particules, ou
sous la forme de fibres, qui servent de support pour l'agent antimicrobien.

4. Procédé selon l'une des revendications 1 à 3, **caractérisé en ce que** le matériau de revêtement, de préférence la résine époxy, et introduit dans la conduite tubulaire au moyen d'une cartouche, de préférence une cartouche à deux composants.

5. Procédé selon l'une des revendications 1 à 4, **caractérisé en ce que** le matériau de revêtement est introduit à une extrémité d'une conduite tubulaire ouverte sur au moins deux côtés, jusqu'à ce qu'il ressorte à l'autre extrémité.

6. Procédé selon l'une des revendications 1 à 5, **caractérisé en ce que** le matériau de revêtement est aspiré, soufflé ou pressé à travers la conduite tubulaire, de préférence en alternance, et **en ce que** le matériau de revêtement est déplacé en va-et-vient dans la conduite tubulaire par application alternée d'une surpression et d'une dépression ou par application alternée d'une surpression aux deux extrémités de la conduite tubulaire, ou encore par application alternée d'une dépression aux deux extrémités de la conduite tubulaire.

7. Procédé selon l'une des revendications 1 à 6, **caractérisé en ce que**, pour l'enlèvement des concrétions intérieures, on utilise des moyens abrasifs, pour lesquels on utilise à titre de moyens abrasifs de préférence du sable ou du corindon.

8. Procédé selon la revendication 7, **caractérisé en ce que** les moyens abrasifs sont entraînés dans un milieu en écoulement, ledit milieu en écoulement étant aspiré, soufflé ou pressé à travers la conduite tubulaire, ou étant aspiré ou soufflé ou pressé en alternance à travers la conduite tubulaire, et **en ce que** le milieu en écoulement peut être déplacé en va-et-vient dans la conduite tubulaire par application alternée d'une surpression et d'une dépression ou par application alternée d'une surpression aux deux extrémités de la conduite tubulaire, ou encore par application alternée d'une dépression aux deux extrémités de la conduite tubulaire.

9. Procédé selon la revendication 8, **caractérisé en ce que** l'on utilise de l'eau ou de l'air à titre de milieu en écoulement.

10. Procédé selon la revendication 8 ou 9, **caractérisé en ce que** les moyens abrasifs sont filtrés hors du milieu en écoulement après l'élimination des concrétions intérieures.

11. Procédé selon l'une des revendications 8 à 10, **caractérisé en ce que** les concrétions intérieures sont éliminées par application d'ultrasons.

12. Procédé selon l'une des revendications 1 à 11, **caractérisé en ce que** la conduite tubulaire est réchauffée après élimination des concrétions intérieures.
